(19) Europäisches Patentamt
European Patent Office
Office européen des brevets

(11) **EP 3 772 017 A1**

(12) **EUROPÄISCHE PATENTANMELDUNG**

(43) Veröffentlichungstag:
**03.02.2021  Patentblatt 2021/05**

(51) Int Cl.:
**G06K 9/00** *(2006.01)*        **G06K 9/52** *(2006.01)*
**G06K 9/62** *(2006.01)*

(21) Anmeldenummer: **20171685.9**

(22) Anmeldetag: **28.04.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **01.08.2019  DE 102019211557**

(71) Anmelder: **Siemens Mobility GmbH**
**81739 München (DE)**

(72) Erfinder:
• **Dyban, Pavlo**
  **10247 Berlin (DE)**
• **Sema, Albi**
  **10115 Berlin (DE)**

(54) **BAHNSIGNALERKENNUNG FÜR AUTONOME SCHIENENFAHRZEUGE**

(57)    Es wird ein Verfahren zur Bahnsignalerkennung beschrieben. Bei dem Verfahren werden Bilddaten (BD) von einem Frontbereich eines Schienenfahrzeugs (50) erfasst. Es erfolgt ein auf maschinellem Lernen basiertes Erfassen einzelner Signalkammern (SGK). Auf Basis einer Kombination der einzelnen Signalabschnitte (SGK) wird schließlich ein Signal (SG) ermittelt. Es wird auch eine Bahnsignalerkennungseinrichtung (40) beschrieben. Weiterhin wird ein Verfahren zum Bereitstellen einer trainierten Kammerdetektionseinheit (42a) beschrieben. Es wird auch eine Trainingseinrichtung (80) beschrieben. Weiterhin wird ein Schienenfahrzeug (50) beschrieben.

FIG 1

EP 3 772 017 A1

**Beschreibung**

Die Erfindung betrifft ein Verfahren zur Bahnsignalerkennung. Zur Bildsignalerkennung werden dabei Bilddaten von einem Frontbereich eines Schienenfahrzeugs erfasst. Außerdem betrifft die Erfindung eine Bahnsignalerkennungseinrichtung. Ferner betrifft die Erfindung ein Verfahren zum Bereitstellen einer trainierten Kammerdetektionseinheit. Die Erfindung betrifft auch eine Trainingseinrichtung. Überdies betrifft die Erfindung ein Schienenfahrzeug.

Autonome Fahrzeuge müssen eine Verkehrssituation auf ähnliche Weise analysieren, wie Menschen dies tun, und basierend auf dem Verständnis der Situation Steuerungshandlungen vornehmen. Autonome Fahrzeuge müssen befahrbare Bereiche erkennen, Fußgänger erkennen, den Straßenverkehr erfassen, Verkehrszeichen und andere Objekte im Fahrbereich erkennen und gegebenenfalls deren Bewegungsverhalten erfassen. Besonders die Erkennung von Verkehrszeichen ist ein wichtiger Punkt, um autonomes Fahren zu ermöglichen.

Insbesondere im Schienenverkehr ist die gleichzeitige Erkennung von einer Vielzahl von Signalzuständen in Echtzeit notwendig, um die Umgebung zu erfassen und die Fahrt konform mit Verkehrsregeln zu planen.

Eine herkömmliche Signalerkennung wird basierend auf künstlichen neuronalen Netzwerken realisiert. Bei solchen Herangehensweisen wird ein Algorithmus auf Basis einer großen Anzahl annotierter Trainingsbilder trainiert. Dabei zeigt jedes Bild ein Signal, das mit einem Kommentar beschrieben und mit einer Markierung versehen wird, die einem Signalzustand entspricht. Unterschiedliche Arten von künstlichen neuronalen Netzen erzielen unterschiedliche Genauigkeiten und Laufzeitleistungen. Üblicherweise muss in Abhängigkeit von einer vorhandenen Hardware und einer aktuellen Anwendung entweder ein künstliches neuronales Netz mit einer hohen Genauigkeit oder einer hohen Laufzeitleistung ausgewählt werden.

Es besteht also die Aufgabe, ein Verfahren und eine Vorrichtung zur simultanen Bahnsignalerkennung mit verbesserter Zuverlässigkeit für ein autonomes Schienenfahrzeug bereitzustellen.

Diese Aufgabe wird durch ein Verfahren zur Bahnsignalerkennung gemäß Patentanspruch 1, eine Bahnsignalerkennungseinrichtung gemäß Patentanspruch 7, ein Verfahren zum Bereitstellen einer trainierten Kammerdetektionseinheit gemäß Patentanspruch 8, eine Trainingseinrichtung gemäß Patentanspruch 10 und ein Schienenfahrzeug gemäß Patentanspruch 12 gelöst.

Bei dem erfindungsgemäßen Verfahren zur Bahnsignalerkennung werden zunächst Bilddaten von einem Frontbereich vor einem Schienenfahrzeug erfasst. Die Kamera kann zum Beispiel an der Vorderseite des Schienenfahrzeugs angeordnet sein und den Bereich vor dem Schienenfahrzeug, in dem möglicherweise Signale auftreten können, bildlich erfassen. Auf Basis der erfassten Bilddaten wird nun ein Auswertungsprozess durchgeführt, der einen auf maschinellem Lernen basierten Erfassungsprozess, im Folgenden auch als Algorithmus bezeichnet, nutzt, der beispielsweise durch ein neuronales Netz realisiert wird. Mit Hilfe dieses Algorithmus wird nun nicht das ganze Signal, welches möglicherweise aus mehreren simultan erzeugten Lichtzeichen besteht, ermittelt, sondern es werden zunächst einzelne Signalkammern erkannt. Die Signalkammern können zum Beispiel durch den Algorithmus aufgrund der Farbunterschiede von Bildbereichen und der speziellen Geometrie der Signalkammern erkannt werden. Üblicherweise ist in Farbbildern der Hintergrund mehrfarbig gestaltet, während die Signalkammern schwarz gefärbt sind und gegebenenfalls gelb bzw. weiß leuchtende Lichtzeichen aufweisen. Allerdings lernt ein neuronales Netz eine Erkennung auf Basis einer viel größeren Anzahl von Merkmalen, so dass in manchen Fällen auch andere Bildmerkmale ein größeres Gewicht bei der Signalkammererkennung haben können als die genannten Merkmale.

Weiterhin erfolgt vorzugsweise auf dem maschinellen Lernen basierend ein automatisiertes Erkennen einzelner Signalabschnitte, die auf den erfassten einzelnen Signalkammern beruhen. D. h., die einzelnen erkannten Signalkammern werden zunächst mit Hilfe des auf maschinellem Lernen basierenden Algorithmus, der zum Beispiel durch ein künstliches neuronales Netz realisiert wird, getrennt ausgewertet. Dieser Schritt kann, muss aber nicht durch ein auf maschinellem Lernen basierendes Computerprogramm realisiert sein. Jeder dieser Signalkammern wird ein Teilsignal bzw. ein Signalabschnitt zugeordnet. Schließlich erfolgt ein Zusammensetzen der Teilsignale zu einem Gesamtsignal. D. h., es wird ein Signal auf Basis einer Kombination der einzelnen Signalabschnitte ermittelt. Vorteilhaft kann der Umfang einer Trainingsdatenbank, welche für ein Training des zur Signalerkennung genutzten Algorithmus verwendet wird, im Vergleich zu einer direkten Signalerkennung stark reduziert werden. Da die Menge der benötigten Trainingsdaten in Abhängigkeit von den möglichen Kombinationen der gleichzeitig möglichen Signalzustände exponentiell wächst, kann durch das Aufteilen des Erkennungsvorgangs die benötigte Datenmenge zum Training der Signalkammererkennung stark reduziert werden. Diese starke Reduktion ermöglicht ein Trainieren des neuronalen Netzes hinsichtlich sehr vieler auch sehr seltener Signalzustände. Weiterhin wird bei einem Training des neuronalen Netzes hinsichtlich der Detektion einzelner Kammern auch eine hohe Genauigkeit erreicht, ohne dass das Laufzeitverhalten des durch das neuronale Netz realisierten Signalerkennungsverfahrens verschlechtert wird.

Die Robustheit des Signalerkennungsverfahrens wird durch die Datenmenge, die zum Trainieren verwendet wurde, bestimmt. Beinhaltet der Trainingsdatensatz genügend Bilder von schlechten bzw. seltenen Wetterbedingungen (z. B. Regen, Hagel, Sturm), so erlernt das neuronale Netz, auch unter diesen Bedingungen die Bahnsignale richtig zu erkennen. Außerdem wird der Algorithmus des neuronalen Netzes dadurch robuster, dass während des Trainings die Daten augmentiert - d. h. modifiziert, gedreht, gezogen und verrauscht - werden. Damit erlernt der auf dem maschinellen Lernen basierende Algorithmus eine größere Variation an Formen und Aussehen der Signale und er lernt, sich auf die wichtigen Aspekte (Features) des Signalmusters zu konzentrieren. Nicht zuletzt wird vorzugsweise für jede Detektion eine Konfidenz berechnet. Diese erlaubt es, den Algorithmus für seltene Anwendungsfälle zu konfigurieren, sodass bei ungesehenen Wetterbedingungen das Verfahren auch Detektionen mit geringerer Konfidenz erlaubt und damit für diese Anwendungsfälle auch robust anwendbar wird. Das erfindungsgemäße Signalerkennungsverfahren wurde für regnerische, sonnige und dunkle Wettersituationen erfolgreich getestet.

Die erfindungsgemäße Bahnsignalerkennungseinrichtung weist eine Bilderfassungseinheit, wie zum Beispiel eine Kamera, zum Erfassen von Bilddaten von einem Frontbereich vor einem Schienenfahrzeug auf. Die erfindungsgemäße Bahnsignalerkennungseinrichtung umfasst zudem eine Kammerdetektionseinheit zum auf maschinellem Lernen basierten Erfassen und Erkennen einzelner Signalkammern. Mit der Kammerdetektionseinheit werden in den von dem Frontbereich erfassten Bilddaten einzelne Signalkammern erkannt. Die Signalkammern und vorzugsweise auch die Bedeutung der den einzelnen Signalkammern zugeordneten Teilsignale werden auf Basis eines auf maschinellem Lernen basierten Algorithmus detektiert. Bei der Konfiguration des Algorithmus kann beispielsweise die äußere Geometrie der Signalkammern sowie der einzelnen möglichen Signalzeichen zur Erkennung genutzt werden. Da die Zahl möglicher Signalzeichen relativ beschränkt ist, kann für die Erkennung einzelner Signalzeichen die Menge der Trainingsdaten kleiner gehalten werden als für die Erkennung eines ganzen Bahnsignals mit mehreren Signalkammern. Die erfindungsgemäße Bahnsignalerkennungseinrichtung umfasst eine Signalerkennungseinheit zum Ermitteln eines Signals auf Basis einer Kombination der einzelnen Signalabschnitte. Die Detektion der kombinierten Signale selbst kann nun ohne eine Datenbasis komplexer Trainingsdaten erfolgen, da bei diesem Schritt allein vorbekannte Signalkombinationen interpretiert werden müssen, die nicht trainiert werden müssen. Die erfindungsgemäße Bahnsignalerkennungseinrichtung teilt die Vorteile des erfindungsgemäßen Verfahrens zur Bahnsignalerkennung.

Bei dem erfindungsgemäßen Verfahren zum Bereitstellen einer trainierten Kammerdetektionseinheit werden gelabelte Eingangstrainingsdaten empfangen. Bei den gelabelten Eingangstrainingsdaten handelt es sich um Bilddaten, die Bildaufnahmen von der Frontseite von Schienenfahrzeugen umfassen. Weiterhin werden gelabelte Ausgangstrainingsdaten empfangen, wobei die Ausgangstrainingsdaten mit den Eingangstrainingsdaten zusammenhängen. Bei den gelabelten Ausgangstrainingsdaten handelt es sich um Informationen über identifizierte Signalkammern. Bei diesen Informationen kann es sich zum Beispiel um annotierte Bilddaten handeln, in denen bereits erkannte Signale und deren einzelne Signalkammern eingezeichnet und gekennzeichnet sind.

Basierend auf den Eingangstrainingsdaten und den Ausgangstrainingsdaten wird eine Funktion trainiert. Schließlich wird eine trainierte Funktion für die Kammerdetektionseinheit bereitgestellt. Im Rahmen des Trainingsvorgangs werden Gewichte des neuronalen Netzes derart angepasst, dass die trainierte Funktion bei Eingabe der gelabelten Trainingsdaten die zugehörigen gelabelten Ausgangstrainingsdaten ausgibt bzw. die im Rahmen des Trainingsvorgangs durch das neuronale Netz erzeugten Ausgangsdaten von den gelabelten Ausgangstrainingsdaten möglichst geringe Abweichungen zeigen. Vorteilhaft lassen sich auf diese Weise auch durch starre Modelle nicht erfassbare Zusammenhänge programmieren.

Die erfindungsgemäße Trainingseinrichtung weist eine erste Trainingsschnittstelle zum Empfangen von Eingangstrainingsdaten auf. Teil der erfindungsgemäßen Trainingseinrichtung ist auch eine zweite Trainingsschnittstelle zum Empfangen von Ausgangstrainingsdaten, wobei die Ausgangstrainingsdaten mit den Eingangstrainingsdaten zusammenhängen. Die erfindungsgemäße Trainingseinrichtung umfasst überdies eine Trainingsrechnereinheit zum Trainieren einer Funktion zur automatisierten Steuerung basierend auf den Eingangstrainingsdaten und den Ausgangstrainingsdaten. Schließlich weist die erfindungsgemäße Trainingseinrichtung eine dritte Trainingsschnittstelle zum Bereitstellen der Trainingsfunktion für ein autonomes Schienenfahrzeug bzw. eine Kammerdetektionseinheit eines solchen Schienenfahrzeugs auf. Die erfindungsgemäße Trainingseinrichtung teilt die Vorteile des erfindungsgemäßen Trainingsverfahrens.

Das erfindungsgemäße Schienenfahrzeug weist die erfindungsgemäße Bahnsignalerkennungseinrichtung auf. Das erfindungsgemäße Schienenfahrzeug teilt die Vorteile des erfindungsgemäßen Verfahrens zur Bahnsignalerkennung.

Die wesentlichen Komponenten der erfindungsgemäßen Signalerkennungseinrichtung und der Trainingseinrichtung können, gegebenenfalls unter Hinzunahme von Hardwareelementen, wie zum Beispiel einer Bildaufnahmeeinheit, zum überwiegenden Teil in Form von Softwarekomponenten ausgebildet sein. Dies betrifft insbesondere die Signalerkennungseinheit, die Kammerdetektionseinheit und die Trainingsrechnereinheit. Grundsätzlich können diese Komponenten aber auch zum Teil, insbesondere wenn es um besonders schnelle Berechnungen geht, in Form von softwareunterstützter Hardware, beispielsweise FPGAs oder dergleichen, realisiert sein. Ebenso können die benötigten Schnittstellen, beispielsweise wenn es nur um eine Übernahme von Daten aus anderen Softwarekomponenten geht, als Softwareschnittstellen ausgebildet sein. Sie können aber auch als hardwaremäßig aufgebaute Schnittstellen ausgebildet sein, die durch geeignete Software angesteuert werden.

Eine weitgehend softwaremäßige Realisierung hat den Vorteil, dass auch schon bisher verwendete Steuereinrichtungen von Schienenfahrzeugen, gegebenenfalls nach einer Nachrüstung mit einer Kameraeinheit, auf einfache Weise durch ein Software-Update nachgerüstet werden können, um auf die erfindungsgemäße Weise zu arbeiten. Insofern wird die Aufgabe auch durch ein entsprechendes Computerprogrammprodukt mit einem Computerprogramm gelöst, welches direkt in eine Speichereinrichtung einer solchen Steuereinrichtung ladbar ist, mit Programmabschnitten, um alle Schritte des erfindungsgemäßen Verfahrens auszuführen, wenn das Programm in der Steuereinrichtung ausgeführt wird. Ein solches Computerprogrammprodukt kann neben dem Computerprogramm gegebenenfalls zusätzliche Bestandteile wie z. B. eine Dokumentation und/oder zusätzliche Komponenten, auch Hardware-Komponenten, wie z. B. Hardware-Schlüssel (Dongles etc.) zur Nutzung der Software, umfassen.

Zum Transport zur Steuereinrichtung und/oder zur Speicherung an oder in der Steuereinrichtung kann ein computerlesbares Medium, beispielsweise ein Memorystick, eine Festplatte oder ein sonstiger transportabler oder fest eingebauter Datenträger dienen, auf welchem die von einer Rechnereinheit der Steuereinrichtung einlesbaren und ausführbaren Programmabschnitte des Computerprogramms gespeichert sind. Die Rechnereinheit kann z. B. hierzu einen oder mehrere zusammenarbeitende Mikroprozessoren oder dergleichen aufweisen. Die Rechnereinheit kann zum Beispiel Teil einer autonomen Steuereinrichtung eines Schienenfahrzeugs sein.

Die abhängigen Ansprüche sowie die nachfolgende Beschreibung enthalten jeweils besonders vorteilhafte Ausgestaltungen und Weiterbildungen der Erfindung. Dabei können insbesondere die Ansprüche einer Anspruchskategorie auch analog zu den abhängigen Ansprüchen einer anderen Anspruchskategorie und deren Beschreibungsteilen weitergebildet sein. Zudem können im Rahmen der Erfindung die verschiedenen Merkmale unterschiedlicher Ausführungsbeispiele und Ansprüche auch zu neuen Ausführungsbeispielen kombiniert werden.

In einer Ausgestaltung des erfindungsgemäßen Verfahrens zur Bahnsignalerkennung ist ein auf dem maschinellen Lernen basierender Erfassungsprozess der einzelnen Signalkammern, der beispielsweise durch ein künstliches neuronales Netz realisiert ist, auf die Aspektverhältnisse der Signalkammern abgestimmt. Da die Geometrie der Signalkammern standardisiert ist, können Signalkammern anhand ihrer äußeren Abmessungen bzw. der geometrischen Form detektiert werden.

Bevorzugt erfolgt das Erfassen der Signalkammern auf Basis von Kartendaten. Vorteilhaft können Kartendaten, in denen die Position von Signalträgern eingezeichnet ist, mit den Standorten von Kandidaten für Signalträger in den Bilddaten abgeglichen werden. Auf diese Weise kann ein auf Basis eines auf maschinellem Lernen basierten Algorithmus bzw. eines künstlichen neuronalen Netzes detektierter Signalträger verifiziert oder als falschpositives Ergebnis verworfen werden und es wird eine erhöhte Zuverlässigkeit des Detektionsergebnisses erreicht. Diese Vorgehensweise kann als eine Art Filterschritt betrachtet werden, bei dem auf Basis von zur Verfügung stehender Vorinformation das durch das neuronale Netz erzeugte Detektionsergebnis überprüft wird.

In einer Ausgestaltung des erfindungsgemäßen Verfahrens zur Bahnsignalerkennung erfolgt das Erfassen der Signalkammern auf Basis einer Selbstlokalisation. Bei dieser Variante, welche vorzugsweise auch mit der Nutzung von Kartendaten kombiniert wird, wird durch Selbstlokalisation die Position der Kamera ermittelt. Eine solche Selbstlokalisation kann zum Beispiel mit Hilfe von odometrischen Sensoren, Balisen oder Satellitennavigationssystemen realisiert werden. Auf Basis dieser Information und der Bilddaten werden dann Positionen von Kandidaten für Signalkammern ermittelt. Diese Positionen können entweder direkt mit einer Datenbank, welche bekannte Positionen von Signalträgern umfasst, oder mit den bereits erwähnten Kartendaten abgeglichen werden. Vorteilhaft kann durch eine solche Verifizierung von Signalkammern die Zuverlässigkeit des Detektionsergebnisses verbessert werden.

Vorzugsweise wird bei dem erfindungsgemäßen Verfahren zur Bildsignalerkennung ein Bildausschnitt auf Basis der Kartendaten und/oder der Selbstlokalisation ausgeschnitten und das Erfassen einzelner Signalkammern erfolgt in diesem Bildausschnitt. Vorteilhaft wird die zu prozessierende Datenmenge stark reduziert. Dies ist möglich, da anhand der Selbstlokalisation und/oder der Kartendaten die Lage von Bereichen, in denen Signalkammern in den Bilddaten auftreten können, abgeschätzt werden können.

In einer Variante des erfindungsgemäßen Verfahrens zur Bahnsignalerkennung wird zur Bahnsignalerkennung ein Filterprozess basierend auf einer der folgenden bekannten Informationen durchgeführt:

- der Konfidenz der erfassten Daten,
- des Abstands der Signalkammern zueinander,
- der Kartendaten.

Dieser nachträgliche Filterprozess dient dazu, falschpositive Daten, die durch den auf maschinellem Lernen basierenden Erfassungsprozess erzeugt wurden, auszusortieren. Je höher die Konfidenz von erfassten Daten ist, desto zuverlässiger kann die Signalerkennung eingestuft werden. Da der typische Abstand von einzelnen Signalkammern desselben Signals bekannt ist, können Objekte, die durch den auf maschinellem Lernen basierten Algorithmus als Signal eingestuft wurden, aber in Wirklichkeit keine Signale sind und daher einen größeren Abstand zwischen den einzelnen "Signalkammern" aufweisen als üblich, aussortiert werden. Die Kartendaten geben Informationen über die möglichen Standorte von Signalen und können somit ebenfalls zum Aussortieren falschpositiver Ergebnisse genutzt werden. Wird zum Beispiel ein "Signal" an einer Position detektiert, an der in der Karte kein Signal eingezeichnet ist, so kann dieses Signal verworfen werden. Vorteilhaft kann die Zuverlässigkeit der ermittelten Signaldaten weiter verbessert werden.

Die verifizierten und damit nicht ausgefilterten detektierten Signaldaten können zur Bewegungsplanung genutzt werden, beispielsweise für eine autonome Steuerung des Schienenfahrzeugs. Vorteilhaft kann eine solche autonome Steuerung realisiert werden, auch dann, wenn die Signaleinheiten nicht auf ein autonomes Fahren, beispielsweise durch entsprechende Sendeeinheiten zur Datenübermittlung an die Schienenfahrzeuge, angepasst sind. Mithin wird ein noch größerer Grad an Autonomie eines autonomen Schienenfahrzeugs erreicht als bei herkömmlichen autonomen Schienenfahrzeugen.

Die Erfindung wird im Folgenden unter Hinweis auf die beigefügten Figuren anhand von Ausführungsbeispielen noch einmal näher erläutert. Es zeigen:

FIG 1 ein Flussdiagramm, welches ein Verfahren zur Signalerkennung gemäß einem Ausführungsbeispiel der Erfindung veranschaulicht,

FIG 2 eine tabellarische Darstellung von Signalelementen,

FIG 3 eine schematische Darstellung eines Bildausschnitts mit erfasstem Signal,

FIG 4 eine schematische Darstellung einer Signalerkennungseinrichtung gemäß einem Ausführungsbeispiel der Erfindung,

FIG 5 ein Schienenfahrzeug gemäß einem Ausführungsbeispiel der Erfindung,

FIG 6 eine schematische Darstellung eines künstlichen neuronalen Netzes gemäß einem Ausführungsbeispiel der Erfindung,

FIG 7 ein Flussdiagramm, welches ein Trainingsverfahren gemäß einem Ausführungsbeispiel der Erfindung veranschaulicht,

FIG 8 eine schematische Darstellung einer Trainingseinrichtung gemäß einem Ausführungsbeispiel der Erfindung und

FIG 9 eine schematische Darstellung eines Systems aus einer Bahnsignalerkennungseinrichtung und der in FIG 8 gezeigten Trainingseinrichtung.

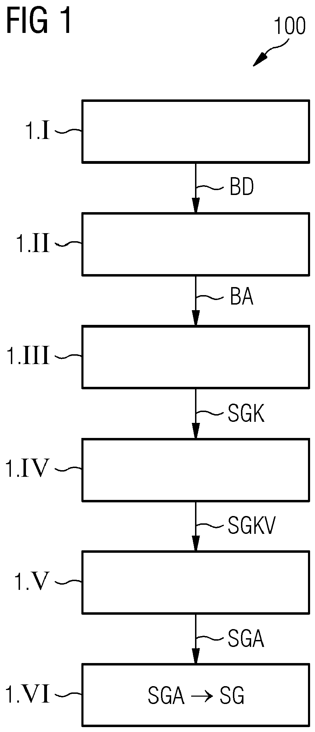

In FIG 1 ist ein Flussdiagramm 100 gezeigt, welches ein Verfahren zur Signalerkennung gemäß einem Ausführungsbeispiel der Erfindung veranschaulicht.

Bei dem Schritt 1.I erfolgt ein Erfassen von Bilddaten BD von einem Frontbereich vor einem Schienenfahrzeug. Die Bilddaten können zum Beispiel mit Hilfe von zwei Bildkameras aufgenommen werden. Eine erste Kamera ist in einem Ausführungsbeispiel nach vorne ausgerichtet, eine zweite Kamera ist in diesem Ausführungsbeispiel dagegen nach rechts und nach vorne gerichtet und weist einen breiten Öffnungswinkel auf, um einen möglichst ausgedehnten Umgebungsbereich bildlich zu erfassen. Mit dieser Anordnung lassen sich auch Signale bzw. Signalträger erkennen, die eher seitlich zu dem Schienenfahrzeug positioniert sind oder denen sich das Schienenfahrzeug bereits auf kurze Distanz genähert hat, so dass sie in einem seitlichen Bereich zu dem Schienenfahrzeug positioniert sind. Die Bilddaten werden in ihrer Auflösung in diesem konkreten Ausführungsbeispiel auf eine niedrigere Auflösung, beispielsweise 512*512 Punkte, reduziert, um den Datenverarbeitungsaufwand zu reduzieren.

Bei dem Schritt 1.II werden Bildabschnitte BA aus den Bilddaten BD extrahiert, welche auf Basis von Kartendaten und Positionsdaten des Schienenfahrzeugs ein Signal enthalten sollten. Genauer gesagt, werden anhand einer Selbstlokalisation und von Kartendaten Relativpositionen von Signaleinheiten zu dem Schienenfahrzeug ermittelt und anhand dieser Information die voraussichtlichen Positionen von Signaleinheiten in den Bilddaten BD geschätzt. Es werden dann Bildabschnitte BA um die geschätzten Positionen herum festgelegt, in denen sich die gesuchten Signaleinheiten aller Wahrscheinlichkeit nach befinden. Auf diese Weise wird die Menge der zu verarbeitenden Bilddaten reduziert. Dieser Schritt ist für die Ausführung der Erfindung nicht dringend notwendig, ermöglicht aber aufgrund der Reduktion der zu verarbeitenden Datenmenge eine kürzere Signalerkennungszeit und verbessert damit die Echtzeitfähigkeit des Verfahrens.

Anschließend werden bei dem Schritt 1.III in den Bilddaten BD auf maschinellem Lernen basierend einzelne Signalkammern SGK detektiert. Um die Trainingszeit und die Laufzeit des Verfahrens zu verkürzen, wird in diesem konkreten Ausführungsbeispiel unter anderem ein bekanntes Aspektverhältnis der Signalkammern SGK dazu genutzt, diese zu identifizieren. Das Aspektverhältnis kann zum Beispiel anhand der Trainingsdaten mittels statistischer Analyse ermittelt werden. D. h., es wird eine vorbekannte Geometrie der Signalkammern mit der Gestalt von in den Bildabschnitten BA befindlichen Strukturen verglichen und bei einem positiven Ergebnis wird eine solche Struktur als Signalkammer eingestuft. Das für die Auswertung verwendete neuronale Netzwerk kann alternativ auch darauf trainiert werden, Signalkammern mit unterschiedlichen Aspektverhältnissen zu detektieren. Die Identifizierung funktioniert also bei entsprechendem Umfang der Trainingsdaten auch bei einer Identifizierung von Signalkammern mit unterschiedlichen Abmessungen.

Bei dem Schritt 1.IV werden Strukturen in den Bildabschnitten BA der Bilddaten BD verworfen, die zwar bei dem Schritt 1.III als Signalkammern SGK eingestuft wurden, aber aufgrund von vorab bekannten Kriterien nicht als Teil einer Signaleinheit ermittelt werden. Beispielsweise kann eine vermeintliche Signaleinheit zu weit entfernt von dem Schienenfahrzeug angeordnet sein und daher nicht erkennbar sein. Überdies kann ein Objekt fälschlicherweise als Signalkammer eingestuft werden und aufgrund fehlender benachbarter Signalkammern als falschpositiv erkannt werden. Auch bei diesem Schritt können Kartendaten genutzt werden, welche zum Beispiel bekannte Standorte von Signalen verzeichnen. Der Schritt 1.IV kann somit auch als Filterprozess verstanden werden.

Anschließend werden bei dem Schritt I.V einzelne Signalabschnitte SGA basierend auf den erfassten und verifizierten einzelnen Signalkammern SGKV erkannt. D. h., es werden Signale bzw. Teilsignale in ihrer Bedeutung erfasst. Bei dem Schritt 1.VI werden schließlich die bei dem Schritt I.V erfassten Informationen miteinander kombiniert, so dass ein Signal SG auf Basis einer Kombination der einzelnen Signalabschnitte erkannt wird. Die erfassten Signaldaten können anschließend einer Sensordatenfusion zugeführt oder einer Bewegungsplanungssoftware zur Verfügung gestellt werden.

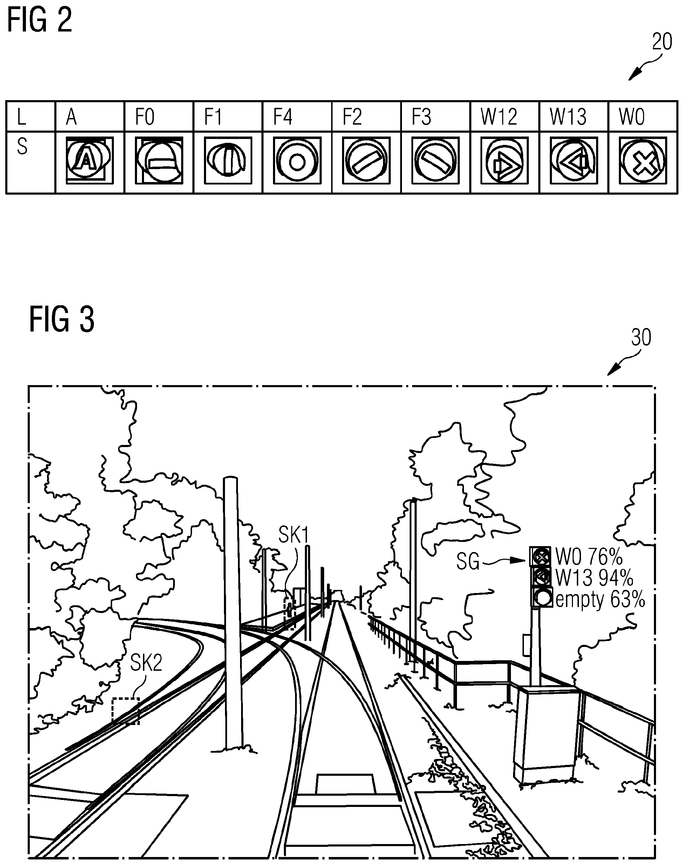

In FIG 2 ist eine tabellarische Darstellung 20 von Signalelementen einzelner Signalkammern SGK veranschaulicht. In der ersten mit L bezeichneten Zeile sind die Signalabkürzungen, wie zum Beispiel A, F0, ..., F3, W12, W13, W0 aufgeführt. In der zweiten mit S bezeichneten Zeile sind die Signale in ihrer bildhaften Gestalt veranschaulicht. Die in FIG 2 gezeigte Auflistung von Signalen bzw. Signalelementen soll nicht als vollständig betrachtet werden und dient nur der Veranschaulichung. Selbstverständlich gibt es weitere Signalzustände, welche ebenfalls bei dem Training des erfindungsgemäßen Signalerkennungsverfahrens mit Hilfe entsprechender annotierter Daten bzw. Trainingsdaten berücksichtigt werden können.

In FIG 3 ist eine schematische Darstellung eines Bildausschnitts 30 mit erfasstem Signal gezeigt. Auf der rechten Seite im Bild ist eine Signaleinheit SG lokalisiert, welche drei übereinander angeordnete Signalkammern SGK umfasst. In der obersten Signalkammer ist ein Signal W0 mit einer Konfidenz von 76 % erkannt worden. In der darunter detektierten Signalkammer ist ein Signal W13 mit einer Konfidenz von 94 % erkannt worden. In der untersten Signalkammer ist mit einer Konfidenz von 63 % erkannt worden, dass in der untersten Signalkammer kein Signal angezeigt wird. Weitere Kandidaten von Signalkammern SK1, SK2 sind in der linken Bildhälfte zu erkennen. Diese Kandidaten können durch Zusatzinformationen bzw. Kriterien herausgefiltert werden, d. h. als falschpositive Ergebnisse identifiziert und verworfen werden. Beispielsweise ist ein erster Kandidat SK1 zu klein und damit zu unsicher, so dass er nicht weiter berücksichtigt wird. Ein zweiter Kandidat SK2 ist nicht einer anderen Signalkammer benachbart, so dass es sich logischerweise auch bei diesem nicht um eine Signalkammer handeln kann, da Signaleinheiten gewöhnlich mehrere benachbarte Signalkammern umfassen.

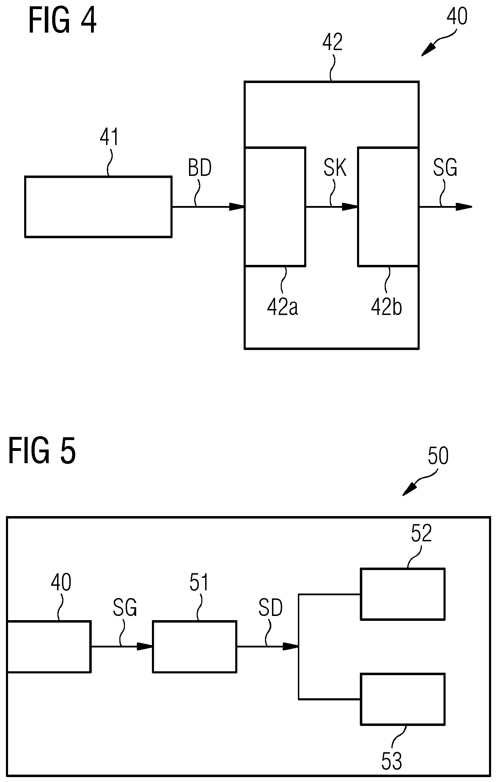

In FIG 4 ist eine schematische Darstellung einer Bahnsignalerkennungseinrichtung 40 gemäß einem Ausführungsbeispiel der Erfindung veranschaulicht. Die Signalerkennungseinrichtung 40 umfasst eine Bilderfassungseinheit 41 zum Erfassen von Bilddaten BD von einem Frontbereich eines Schienenfahrzeugs. Teil der Signalerkennungseinrichtung 40 ist auch eine Auswertungseinheit 42. Die Auswertungseinheit 42 umfasst eine Kammerdetektionseinheit 42a zum auf maschinellem Lernen basierten Erfassen einzelner Signalkammern SK. Die Erfassung der Signalkammern SK umfasst auch eine Erkennung der Semantik der von den einzelnen Signalkammern gezeigten Signalelemente, wie sie in FIG 2 gezeigt sind. Die Auswertungseinheit weist ferner eine Signalerkennungseinheit 42b zum Erkennen eines Signals SG auf Basis einer Kombination der einzelnen Signalkammern SGK auf. Als Erkennung eines Signals SG ist das Erkennen der Bedeutung des Signals zu verstehen.

In FIG 5 ist ein Schienenfahrzeug 50 schematisch dargestellt, welches die in FIG 4 gezeigte Signalerkennungseinrichtung 40 umfasst. Die von der Signalerkennungseinrichtung 40 ermittelten Signaldaten SG werden an eine von dem Schienenfahrzeug 50 umfasste Steuereinrichtung 51 übermittelt, welche auf Basis dieser Signaldaten SG einen Motor 52 und Bremsen 53 automatisiert ansteuert.

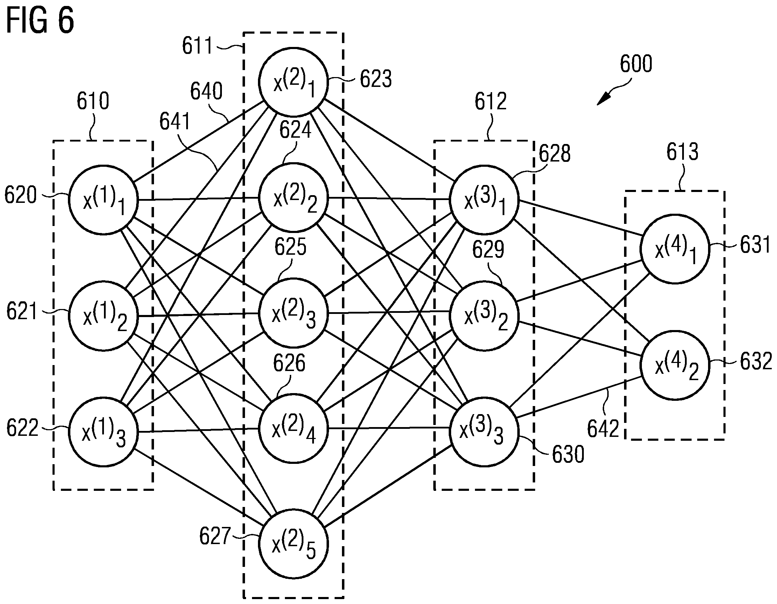

In FIG 6 ist ein künstliches neuronales Netz 600, wie es für die erfindungsgemäße Signalerkennung zum Einsatz kommen kann, schematisch dargestellt. Alternative Bezeichnungen sind "neuronales Netzwerk", "künstliches neuronales Netz" oder "neuronales Netz".

Das künstliche neuronale Netzwerk 600 weist Knoten 620, ..., 632 und Kanten 640, ..., 642 auf, wobei jede Kante 640, ..., 642 eine gerichtete Verbindung von einem ersten Knoten 620, ..., 632 zu einem zweiten Knoten 620, ..., 632 ist. Im Allgemeinen sind der erste Knoten 620, ..., 632 und der zweite Knoten 620, ..., 632 unterschiedliche Knoten 620, ..., 632. Es ist auch möglich, dass der erste Knoten 620, ..., 632 und der zweite Knoten 620, ..., 632 identisch sind.

Beispielsweise ist in FIG 6 die Kante 640 eine gerichtete Verbindung von dem Knoten 620 zu dem Knoten 623 und die Kante 642 ist eine gerichtete Verbindung von dem Knoten 630 zu dem Knoten 632. Eine Kante 640, ..., 642 von einem ersten Knoten 620, ..., 632 zu einem zweiten Knoten 620,..., 632 wird auch als "eingehende Kante" für den zweiten Knoten 620,..., 632 und als "ausgehende Kante" für den ersten Knoten 620,..., 632 bezeichnet.

In diesem Ausführungsbeispiel können die Knoten 620, ..., 632 des künstlichen neuronalen Netzwerks 600 in Schichten 610, ..., 613 angeordnet sein, wobei die Schichten eine intrinsische Reihenfolge aufweisen können, die durch die Kanten 640,..., 642 zwischen den Knoten 620,..., 632 festgelegt wird. Insbesondere die Kanten 640, ..., 642 können nur zwischen benachbarten Schichten oder Knoten auftreten. In dem veranschaulichten Ausführungsbeispiel gibt es eine Eingangsschicht 610, welche nur Knoten 620,..., 622 ohne eingehende Kante aufweist, eine Ausgangsschicht 613, welche nur Knoten 631, 632 ohne ausgehende Kanten aufweist, und versteckte Schichten 611, 612 zwischen der Eingangsschicht 610 und der Ausgangsschicht 613. Im Allgemeinen kann die Anzahl der versteckten Schichten 611, 612 beliebig gewählt werden.

Die Anzahl der Knoten 620,..., 622 innerhalb der Eingangsschicht 610 ist üblicherweise der Anzahl von Eingangswerten des neuronalen Netzwerks zugeordnet und die Anzahl der Knoten 631, 632 innerhalb der Ausgangsschicht 613 ist der Anzahl der Ausgangswerte des neuronalen Netzwerks zugeordnet.

Insbesondere kann eine reelle Zahl als Wert jedem Knoten 620, ..., 632 des neuronalen Netzwerks 600 zugeordnet werden. Hier bezeichnet $x^{(n)}_i$ den Wert des i-ten Knotens 620, ..., 632 der n-ten Schicht 610,..., 613. Die Werte der Knoten 620, ..., 622 der Eingangsschicht 610 entsprechen den Eingangswerten des neuronalen Netzwerks 600, die Werte der Knoten 631, 632 der Ausgangsschicht 613 entsprechen den Ausgangswerten des neuronalen Netzwerks 600. Als "Eingangswerte" können zum Beispiel die erfindungsgemäß verwendeten Bilddaten von der Frontseite eines Schienenfahrzeugs genutzt werden. Als "Ausgangswerte" lassen sich zugehörige Daten bezüglich erkannter Signalkammern SGK verwenden. Weiterhin kann jede Kante 640,..., 642 ein Gewicht aufweisen, das eine reelle Zahl ist, insbesondere kann das Gewicht eine reelle Zahl in dem Intervall [-1, 1] oder innerhalb des Intervalls [0, 1] aufweisen. Hier bezeichnet $w^{(m,n)}_{i,j}$ das Gewicht der Kante zwischen dem i-ten Knoten 620,..., 632 der m-ten Schicht 610,..., 613 und dem j-ten Knoten 620,..., 632 der n-ten Schicht 610,..., 613. Weiterhin ist die Abkürzung $w^{(n)}_{i,j}$ für das Gewicht $w^{(n, n+1)}_{i,j}$ definiert.

Um die Ausgangswerte des neuronalen Netzwerks 100 zu berechnen, werden die Eingangswerte durch das neuronale Netzwerk propagiert. Die Werte der Knoten 620, ..., 632 der (n+1)-ten Schicht 610, ..., 613 können basierend auf den Werten der Knoten 620,..., 632 der n-ten Schicht 510, ..., 613 durch

$$x^{(n+1)}_j = f\left(\sum_i x^{(n)}_i w^{(n)}_{i,j}\right)$$

berechnet werden.

Dabei ist die Funktion f eine Transferfunktion (eine andere Bezeichnung ist "Aktivierungsfunktion"). Bekannte Transferfunktionen sind Stufenfunktionen, Sigmoidfunktionen (zum Beispiel die logistische Funktion, die verallgemeinerte logistische Funktion, der Tangens Hyperbolicus, die Arcustangens-Funktion, die Fehlerfunktion, die Smoothstep-Funktion) oder Gleichrichter-Funktionen. Die Transferfunktion wird hauptsächlich für Normalisierungszwecke genutzt.

Die Werte $x^{(n)}_i$ werden schichtweise durch das neuronale Netzwerk propagiert, wobei die Werte der ersten versteckten Schicht 611 basierend auf den Werten der Eingangsschicht 610 des neuronalen Netzes berechnet werden können und wobei die Werte der zweiten versteckten Schicht 612 basierend auf den Werten der ersten versteckten Schicht 611 berechnet werden können.

Um die Werte $w^{(m,n)}_{i,j}$ für die Kanten festzulegen, muss das neuronale Netz 600 unter Verwendung von Trainingsdaten trainiert werden. Die Trainingsdaten weisen Trainingseingangsdaten und Trainingsausgangsdaten auf (bezeichnet mit yi). Für einen Trainingsschritt wird das neuronale Netz 600 auf die Trainingseingangsdaten angewendet, um berechnete Ausgangsdaten zu erzeugen. Die Trainingsdaten und die berechneten Ausgangsdaten weisen eine Anzahl von Werten auf, deren Anzahl gleich der Anzahl der Knoten der Ausgangsschicht ist.

Ein Vergleich zwischen den berechneten Ausgangsdaten und den Trainingsdaten wird verwendet, um die Gewichte innerhalb des neuronalen Netzwerks 600 rekursiv anzupassen (hierzu wird ein Backpropagation-Algorithmus angewendet). Die Gewichte werden entsprechend der folgenden Formel geändert:

$$w'^m_{i,j} = w^{(n)}_{i,j} - \gamma \delta^{(n)}_j \cdot x^{(n)}_i,$$

wobei $\gamma$ eine Lernrate ist und die Zahlen $\delta^{(n)}_j$ rekursiv berechnet werden können zu:

$$\delta_j^{(n)} = \left(\sum_k \delta_k^{(n+1)} \cdot w_{j,k}^{(n+1)}\right) \cdot f'\left(\sum_i x_{i,j}^{(n)} \cdot w_{i,j}^{(n)}\right)$$

basierend auf $5^{(n+1)}j$, wenn die (n+1)-te Schicht nicht die Ausgangsschicht ist, und

$$\delta_j^{(n)} = \left(x_k^{(n+1)} - y_j^{(n+1)}\right) \cdot f'\left(\sum_i x_{i,j}^{(n)} \cdot w_{i,j}^{(n)}\right),$$

wenn die (n+1)-te Schicht die Ausgangsschicht 613 ist, wobei f' die erste Ableitung der Aktivierungsfunktion ist und $y^{(n+1)}j$ der Vergleichstrainingswert für den j-ten Knoten der Ausgangsschicht 613 ist.

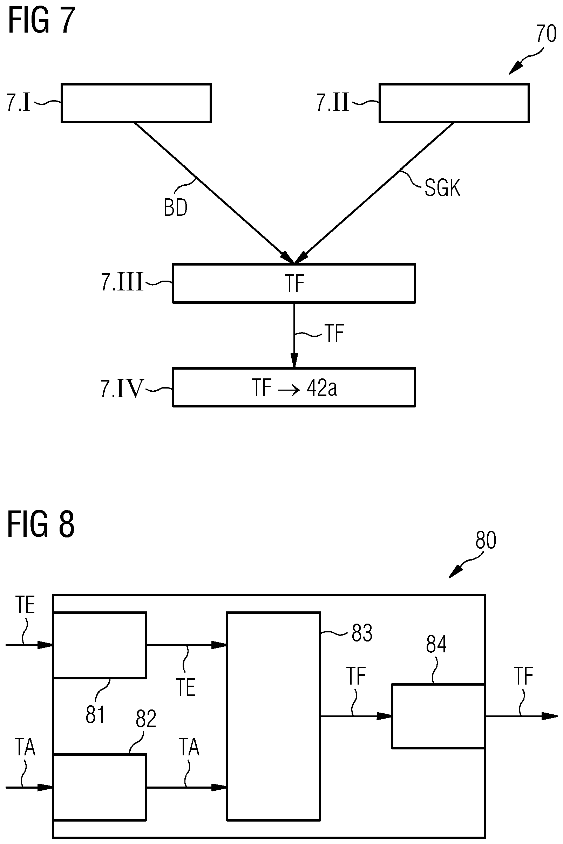

In FIG 7 ist ein Flussdiagramm 700 gezeigt, welches ein Trainingsverfahren zum Trainieren einer Signalerkennung auf Basis von Bilddaten BD veranschaulicht. Bei dem Schritt 7.I werden gelabelte Bilddaten $BD_L$ aus einer Trainingsdatenbank gelesen. Weiterhin werden bei dem Schritt 7.II gelabelte Signalkammerdaten $SGK_L$ aus der Trainingsdatenbank ausgelesen. Die gelabelten Signalkammerdaten $SGK_L$ geben Auskunft über in den Bilddaten $BD_L$ vorhandene Signale. Die bei dem Schritt 7.I und 7.II ausgelesenen gelabelten Trainingsdaten $BD_L$, $SGK_L$ sind aufeinander bezogen in dem Sinne, dass die gelabelten Signalkammerdaten $SGK_L$ den gelabelten Bilddaten $BD_L$ eindeutig zugeordnet sind, d. h. die gelabelten Signalkammerdaten $SGK_L$ stellen die gewünschten Ergebnisse des zu trainierenden Algorithmus bei einer Anwendung auf die gelabelten Eingangsdaten $BD_L$ dar. Die Trainingsdaten $BD_L$, $SGK_L$ werden anschließend bei dem Schritt 7.III zum Training eines neuronalen Netzes TF genutzt. Schließlich wird das trainierte neuronale Netz TF bei dem Schritt 7.IV für eine automatisierte Kammerdetektionseinheit 42a zur Verfügung gestellt.

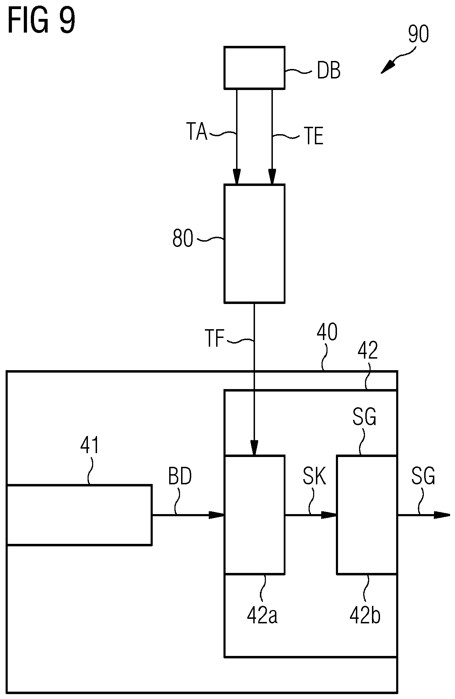

In FIG 8 ist eine schematische Darstellung einer Trainingseinrichtung 80 gemäß einem Ausführungsbeispiel der Erfindung veranschaulicht. Die Trainingseinrichtung 80 umfasst eine erste Trainingsschnittstelle 81 zum Empfangen von Eingangstrainingsdaten TE. Die Eingangstrainingsdaten TE umfassen die in FIG 7 beschriebenen gelabelten Bilddaten $BD_L$. Teil der Trainingseinrichtung 80 ist auch eine zweite Trainingsschnittstelle 81 zum Empfangen von Ausgangstrainingsdaten TA. Die Ausgangstrainingsdaten TA können zum Beispiel die in FIG 7 beschriebenen gelabelten Signalkammerdaten SGK umfassen. Teil der Trainingseinrichtung 80 ist auch eine Trainingsrechnereinheit 83 zum Trainieren einer Funktion TF zur automatisierten Signalkammererkennung basierend auf den Eingangstrainingsdaten TE und den Ausgangstrainingsdaten TA. Die Trainingseinrichtung 80 weist auch eine dritte Trainingsschnittstelle 84 zum Bereitstellen der trainierten Funktion TF für eine Signalkammererkennungseinheit 42a (siehe FIG 4, FIG 9) einer Bahnsignalerkennungseinrichtung 40 (siehe FIG 4, FIG 9) auf.

In FIG 9 ist eine schematische Darstellung eines Systems 90 aus einer Bahnsignalerkennungseinrichtung 40 und der in FIG 8 gezeigten Trainingseinrichtung 80 gemäß einem Ausführungsbeispiel der Erfindung veranschaulicht. Die Trainingseinrichtung 80 liefert eine trainierte Funktion TF an die Kammererkennungseinheit 42a der Bahnsignalerkennungseinrichtung 40. Die trainierte Funktion TF wird auf Basis von Trainingseingangsdaten TE und Trainingsausgangsdaten TA gewonnen, die aus einer Datenbank DB bezogen werden.

Es wird abschließend noch einmal darauf hingewiesen, dass es sich bei den vorbeschriebenen Verfahren und Vorrichtungen lediglich um bevorzugte Ausführungsbeispiele der Erfindung handelt und dass die Erfindung vom Fachmann variiert werden kann, ohne den Bereich der Erfindung zu verlassen, soweit er durch die Ansprüche vorgegeben ist. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Ebenso schließt der Begriff "Einheit" nicht aus, dass diese aus mehreren Komponenten besteht, die gegebenenfalls auch räumlich verteilt sein können.

## Patentansprüche

1. Verfahren zur Bahnsignalerkennung, aufweisend die Schritte:

    - Erfassen von Bilddaten (BD) von einem Frontbereich eines Schienenfahrzeugs (50),
    - auf maschinellem Lernen basiertes Erfassen einzelner Signalkammern (SGK),
    - automatisiertes Erkennen eines Signals (SG) basierend auf den erfassten einzelnen Signalkammern (SGK).

2. Verfahren nach Anspruch 1, wobei ein auf dem maschinellen Lernen basierender Erfassungsprozess der einzelnen Signalkammern (SGK) auf die Aspektverhältnisse der Signalkammern (SGK) abgestimmt ist.

3. Verfahren nach Anspruch 1 oder 2, wobei das Erfassen der Signalkammern (SGK) auf Basis von Kartendaten (KD) und vorzugsweise auf Basis einer Selbstlokalisation (SL) erfolgt.

4. Verfahren nach einem der vorstehenden Ansprüche, wobei ein Bildausschnitt (BA) auf Basis der Kartendaten oder der Selbstlokalisation (SL) ausgeschnitten wird und das Erfassen einzelner Signalkammern (SGK) in dem Bildausschnitt (BA) erfolgt.

5. Verfahren nach einem der vorstehenden Ansprüche, wobei ein Filterprozess basierend auf einer der folgenden Informationen durchgeführt wird:

   - der Konfidenz der erfassten Daten (SGK),
   - dem Abstand der Signalkammern (SGK),
   - der Kartendaten,

   um falschpositive Daten auszusortieren.

6. Verfahren nach einem der vorstehenden Ansprüche, wobei die nicht ausgefilterten detektierten Signaldaten (SGKV, SGA, SG) zur Bewegungsplanung genutzt werden.

7. Bahnsignalerkennungseinrichtung (40), aufweisend:

   - eine Bilderfassungseinheit (41) zum Erfassen von Bilddaten (BD) von einem Frontbereich eines Schienenfahrzeugs (50),
   - eine Kammerdetektionseinheit (42a) zum auf maschinellem Lernen basierten Erfassen einzelner Signalkammern (SGK),
   - eine Signalerkennungseinheit (42b) zum automatisierten Erkennen eines Signals (SG) auf Basis einer Kombination der einzelnen Signalkammern (SGK).

8. Verfahren zum Bereitstellen einer trainierten Kammerdetektionseinheit (42a), vorzugsweise einer Bahnsignalerkennungseinrichtung nach Anspruch 7, aufweisend die Schritte:

   - Empfangen von gelabelten Eingangstrainingsdaten (TE),
   - Empfangen von gelabelten Ausgangstrainingsdaten (TA), wobei die Ausgangstrainingsdaten (TA) mit den Eingangstrainingsdaten (TE) zusammenhängen,
   - Trainieren einer Funktion (SF) basierend auf den Eingangstrainingsdaten (TE) und den Ausgangstrainingsdaten (TA),
   - Bereitstellen einer trainierten Funktion (TF) für die Kammerdetektionseinheit (42a).

9. Verfahren nach einem der Ansprüche 1 bis 6, wobei das Erfassen einzelner Signalkammern (SGK) gemäß dem Verfahren nach Anspruch 8 trainiert wird.

10. Trainingseinrichtung (80), aufweisend:

    - eine erste Trainingsschnittstelle (81) zum Empfangen von Eingangstrainingsdaten (TE),
    - eine zweite Trainingsschnittstelle (82) zum Empfangen von Ausgangstrainingsdaten (TA), wobei die Ausgangstrainingsdaten (TA) mit den Eingangstrainingsdaten (TE) zusammenhängen,
    - eine Trainingsrechnereinheit (83) zum Trainieren einer Funktion (TF) zur automatisierten Steuerung basierend auf den Eingangstrainingsdaten (TE) und den Ausgangstrainingsdaten (TA),
    - eine dritte Trainingsschnittstelle (84) zum Bereitstellen der Trainingsfunktion (TF) für eine Kammerdetektionseinheit (42a) eines Schienenfahrzeugs (50).

11. Bahnsignalerkennungseinrichtung (40) nach Anspruch 7, ferner aufweisend eine Trainingseinrichtung (80) nach Anspruch 10.

12. Schienenfahrzeug (50), aufweisend eine Bahnsignalerkennungseinrichtung (40) nach Anspruch 7 oder 11.

13. Computerprogrammprodukt mit einem Computerprogramm, welches direkt in eine Speichereinheit eines Schienenfahrzeugs ladbar ist, mit Programmabschnitten, um alle Schritte eines Verfahrens nach einem der Ansprüche 1 bis 6 oder 8 bis 9 auszuführen, wenn das Computerprogramm in der Überwachungseinrichtung ausgeführt wird.

14. Computerlesbares Medium, auf welchem von einer Rechnereinheit ausführbare Programmabschnitte gespeichert sind, um alle Schritte des Verfahrens nach einem der Ansprüche 1 bis 6 oder 8 bis 9 auszuführen, wenn die Programmabschnitte von der Rechnereinheit ausgeführt werden.

# FIG 1

100

| 1.I | |
|---|---|

↓ BD

| 1.II | |
|---|---|

↓ BA

| 1.III | |
|---|---|

↓ SGK

| 1.IV | |
|---|---|

↓ SGKV

| 1.V | |
|---|---|

↓ SGA

| 1.VI | SGA → SG |
|---|---|

# FIG 2

20

| L | A | F0 | F1 | F4 | F2 | F3 | W12 | W13 | W0 |
|---|---|----|----|----|----|----|-----|-----|-----|
| S | | | | | | | | | |

# FIG 3

30

SK1

SG → W0 76%
W13 94%
empty 63%

SK2

FIG 4

42

40

41

BD

SK

SG

42a 42b

FIG 5

50

52

40

51

SG

SD

53

FIG 6

## FIG 7

7.I — [ ]

7.II — [ ]  ⬉ 70

BD

SGK

7.III — [ TF ]

TF

7.IV — [ TF → 42a ]

## FIG 8

⬋ 80

TE

TA

81

82

TE

TA

83

TF

84

TF

# FIG 9

90

DB

TA  TE

80

TF  40  42

41  SG

BD  SK  SG

42a  42b

EP 3 772 017 A1

Europäisches Patentamt
European Patent Office
Office européen des brevets

**EUROPÄISCHER RECHERCHENBERICHT**

Nummer der Anmeldung

EP 20 17 1685

**EINSCHLÄGIGE DOKUMENTE**

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Georgios Karagiannis ET AL: "Deep Learning for Detection of Railway Signs and Signals : Proceedings of the 2019 Computer Vision Conference (CVC), Volume 1" In: "Genetic and Evolutionary Computing : Proceedings of the Twelfth International Conference on Genetic and Evolutionary Computing, December 14-17, 2019; Changzhou, Jiangsu, China", 24. April 2019 (2019-04-24), Springer, Berlin, XP055728297, ISSN: 2194-5357 Bd. 943, Seiten 1-15, DOI: 10.1007/978-3-030-17795-9_1, * Zusammenfassung * * Sections 1, 3.1, 4.1, 5 * * Abbildungen 1, 2, 3, 7, 9 * ----- | 1-14 | INV. G06K9/00 G06K9/52 G06K9/62 |
| A | R. MARMO ET AL: "Railway sign detection and classification", 2006 IEEE INTELLIGENT TRANSPORTATION SYSTEMS CONFERENCE : TORONTO, ONTARIO, CANADA, 17 - 20 SEPTEMBER 2006, 1. Januar 2006 (2006-01-01), Seiten 1358-1363, XP055728292, USA DOI: 10.1109/ITSC.2006.1707412 ISBN: 978-1-4244-0093-5 * Zusammenfassung * ----- | 1-14 | RECHERCHIERTE SACHGEBIETE (IPC) G06K |
| A | DE 10 2014 211851 A1 (BOSCH GMBH ROBERT [DE]) 24. Dezember 2015 (2015-12-24) * Zusammenfassung * * Absätze [0002], [0010], [0011] * ----- | 1-14 | |

Der vorliegende Recherchenbericht wurde für alle Patentansprüche erstellt

| Recherchenort | Abschlußdatum der Recherche | Prüfer |
|---|---|---|
| Den Haag | 11. September 2020 | Philips, Petra |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 20 17 1685

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-09-2020

| Im Recherchenbericht angeführtes Patentdokument | Datum der Veröffentlichung | Mitglied(er) der Patentfamilie | Datum der Veröffentlichung |
|---|---|---|---|
| DE 102014211851 A1 | 24-12-2015 | DE 102014211851 A1<br>US 2015367871 A1 | 24-12-2015<br>24-12-2015 |

Für nähere Einzelheiten zu diesem Anhang : siehe Amtsblatt des Europäischen Patentamts, Nr.12/82

EPO FORM P0461